# EUROPEAN PATENT APPLICATION

(11) **EP 4 462 447 A1**
(43) Date of publication of application: **13.11.2024**
(21) Application number: 23737330.3
(22) Date of filing: 02.01.2023
(51) Int. Cl.: G21D 1/00, G21C 9/04, A62C 35/10

(54) **METHOD AND APPARATUS FOR DISMANTLING NUCLEAR POWER PLANT**

(30) Priority: 04.01.2022 KR 20220000749
(71) Applicant: Korea Hydro & Nuclear Power Co., Ltd, Gyeongju-si, Gyeongsangbuk-do 38120 (KR)
(72) Inventor: HWANG, Young Hwan, Daejeon 34101 (KR); LEE, Mi Hyun, Daejeon 34101 (KR); KIM, Cheon Woo, Daejeon 34101 (KR); HWANG, Seok Ju, Daejeon 34101 (KR)
(74) Representative: Glawe, Delfs, Moll
(86) International application number: PCT/KR2023/000027
(87) International publication number: WO 2023/132582

(57) **Abstract**

There are provided a nuclear power plant dismantling method and apparatus. The nuclear power plant dismantling method includes: selecting a nuclear reactor to be dismantled; and performing nuclear power plant dismantling work on the nuclear reactor through a nuclear reactor dismantling apparatus, wherein the nuclear reactor dismantling apparatus includes: a frame unit shielding the nuclear reactor to prevent contaminants in the nuclear reactor from being released to the outside; a cutting module provided on the frame unit and performing cutting work on the nuclear reactor; a link fixing module having a hollow area formed therein, entering an internal space of the nuclear reactor to link the frame unit and the nuclear reactor with each other, and having a bar shape; and a purging module entering the hollow area of the link fixing module and performing purging on the inside of the nuclear reactor in order to secure safety in the cutting work.

## Description

### [Technical Field]

The present disclosure relates to a nuclear power plant dismantling method and apparatus.

### [Background Art]

In dismantling a radioactive pressure vessel of a nuclear power plant, cutting and dismantling is performed using a thermal cutting method. In such a case, an oxy-propane torch has been used, but fire surveillance and fire extinguishing equipment have not been disposed. Accordingly, there is a problem that it is not easy to secure safety against a fire during a cutting and dismantling process using the thermal cutting method.

### [Disclosure]

### [Technical Problem]

Aspects of the present disclosure provide a nuclear power plant dismantling apparatus and method capable of securing safety against a fire in performing thermal cutting as nuclear power plant dismantling work.

Aspects of the present disclosure also provide a nuclear power plant dismantling apparatus and method capable of allowing extinguishment to be automatically performed at a fire occurrence site in the event of fire.

Aspects of the present disclosure also provide a nuclear power plant dismantling apparatus and method provided with a fire extinguishing structure capable of allowing extinguishment to be stably performed without interference with surrounding systems in a general operating environment.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

### [Technical Solution]

According to an aspect of the present disclosure, there is provided a nuclear power plant dismantling method including: selecting a nuclear reactor to be dismantled; and performing nuclear power plant dismantling work on the nuclear reactor through a nuclear reactor dismantling apparatus, wherein the nuclear reactor dismantling apparatus includes: a frame unit shielding the nuclear reactor to prevent contaminants in the nuclear reactor from being released to the outside; a cutting module provided on the frame unit and performing cutting work on the nuclear reactor; a fire extinguishing module provided on the frame unit, and melted by a heat source based on a fire to automatically supply a fire extinguishing fluid positioned therein to the outside when the fire occurs in the nuclear reactor.

The frame unit may include an upper structure portion and a lower structure portion facing the upper structure portion, and a plurality of fire extinguishing modules may be provided between the upper structure portion and the lower structure portion, and supply the fire extinguishing fluid to a fire occurrence side where the fire occurs in response to the heat source.

The lower structure portion of the frame unit may be provided as a ring-shaped body surrounding a peripheral portion of the nuclear reactor, and the plurality of fire extinguishing modules may be disposed on a peripheral portion of the lower structure portion, and each supply the fire extinguishing fluid to the fire occurrence side based on the heat source.

The fire extinguishing module may include: an outer cylindrical body including a hollow metal material; and an inner cylindrical body accommodated inside the tubular portion and filled with the fire extinguishing fluid, the outer cylindrical body may have a cut portion formed by cutting at least a portion of a peripheral portion of an outer peripheral surface thereof in a horizontal direction or a vertical direction, and when the inner cylindrical body is melted in response to the fire, the fire extinguishing fluid may be supplied to the outside through the cut portion.

According to another aspect of the present disclosure, there is provided a nuclear power plant dismantling apparatus including: a frame unit shielding a nuclear reactor to prevent contaminants in the nuclear reactor from being released to the outside; a cutting module provided on the frame unit and performing cutting work on the nuclear reactor; and a fire extinguishing module provided on the frame unit, and melted by a heat source based on a fire to automatically supply a fire extinguishing fluid positioned therein to the outside when the fire occurs in the nuclear reactor.

### [Advantageous Effects]

The nuclear power plant dismantling method and apparatus according to the present disclosure as described above have one or more of the following effects.

The present disclosure may secure safety against a fire in performing thermal cutting as nuclear power plant dismantling work.

In addition, the present disclosure may allow extinguishment to be automatically performed at a fire occurrence site in the event of fire.

Further, the present disclosure may allow extinguishment to be stably performed without interference with surrounding systems in a general operating environment.

### [Description of Drawings]

FIG. 1 is a diagram illustrating a nuclear power plant dismantling apparatus according to an embodiment of the present disclosure;
FIGS. 2 to 5 are views illustrating a configuration of FIG. 1 in detail; and
FIG. 6 is a flowchart sequentially illustrating an operation method of the nuclear power plant dismantling apparatus according to an embodiment of the present disclosure.

### [Mode for Invention]

Hereinafter, embodiments of the present disclosure will be described in detail with reference to the accompanying drawings. Advantages and features of the present disclosure and methods for accomplishing these advantages and features will become apparent from embodiments to be described later in detail with reference to the accompanying drawings. However, the present disclosure is not limited to embodiments to be disclosed below, but may be implemented in various different forms, these embodiments will be provided only in order to make the present disclosure complete and allow one of ordinary skill in the art to completely recognize the scope of the present disclosure, and the present disclosure will be defined by the scope of the claims. Throughout the specification, the same components will be denoted by the same reference numerals.

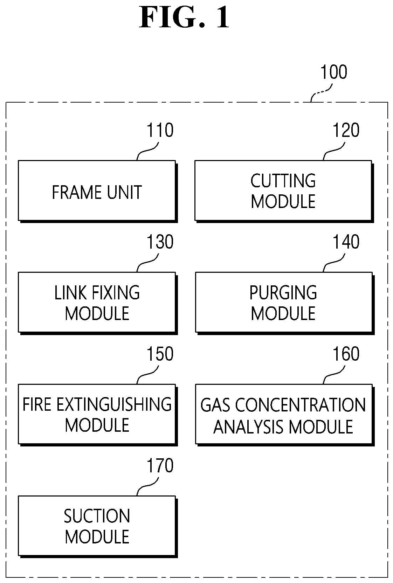

Referring to FIG. 1, a nuclear power plant dismantling apparatus 100 according to an embodiment of the present disclosure includes a frame unit 110, a cutting module 120, a link fixing module 130, a purging module 140, a fire extinguishing module 150, a gas concentration analysis module 160, and a suction module 170.

Here, the frame unit 110 includes an upper structure portion 111 and a lower structure portion 112. The link fixing module 130 includes compartments 131, 132, and 133. The compartments 131, 132, and 133 include a first compartment 131, a second compartment 132, and a third compartment 133.

The purging module 140 includes a first purging module 141, a second purging module 142, and a third purging module 143. The fire extinguishing module 150 includes an outer cylindrical body 151 and an inner cylindrical body 152.

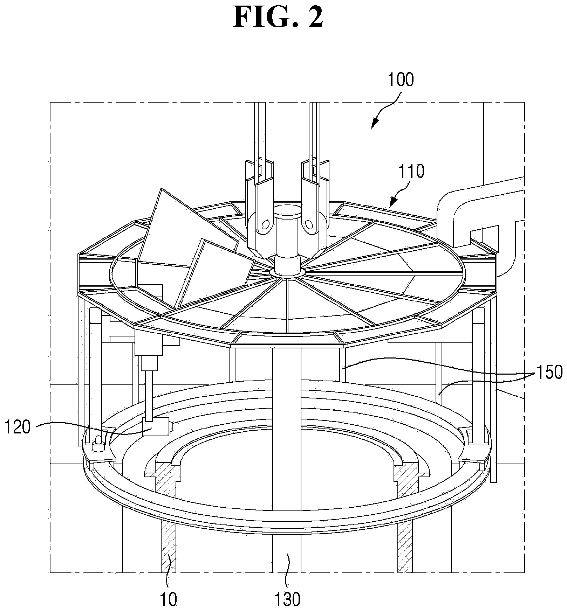

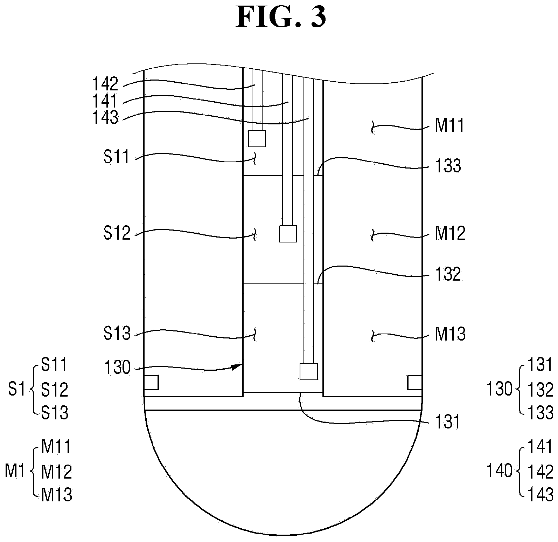

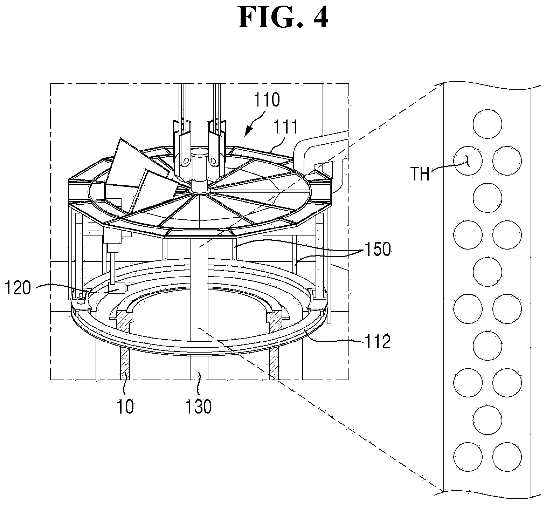

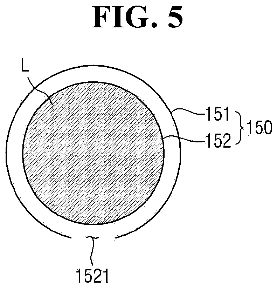

Referring to FIGS. 2 to 5, the frame unit 110 is used to shield the nuclear reactor 10 to prevent contaminants in the nuclear reactor 10 from being released to the outside. To this end, the frame unit 110 is provided as a structure seated on an upper circumferential portion of the nuclear reactor 10 and having a predetermined shape.

The cutting module 120 is provided on the frame unit 110 and performs cutting work on the nuclear reactor 10. The link fixing module 130 has a hollow area S1 formed therein.

The link fixing module 130 enters an internal area M1 of the nuclear reactor 10 to link the frame unit 110 and the nuclear reactor 10 with each other. Here, the link may include various portions such as a physical connection and a functional operation.

The purging module 140 enters the hollow area S1 of the link fixing module 130. The purging module 140 enters the hollow area S1, and then performs purging on the inside of the nuclear reactor 10 in order to secure safety in the cutting work.

The compartments 131, 132, and 133 compartment the link fixing module 130 into a plurality of portions in a height direction. Here, the first compartment 131 of the compartments 131, 132, and 133 is positioned in the height direction of the link fixing module 130, and forms a first area S11 for communication with the internal area M1.

In addition, the second compartment 132 of the compartments 131, 132, and 133 is positioned in the height direction of the link fixing module 130, and forms a second area S12 for communication with the internal area M1 with the first compartment 131.

The third compartment 133 of the compartments 131, 132, and 133 is positioned in the height direction of the link fixing module 130, and forms a third area S3 for communication with the internal area M1 with the second compartment 132.

Meanwhile, the purging module 140 performs purging on the internal area M1 of the nuclear reactor 10 via the first area S11 to the third area S3. The first purging module 141 of the purging module 140 enters the third area S3 and supplies a first purging gas.

The second purging module 142 of the purging module 140 enters the second area S12 via the third compartment 133 and supplies a second purging gas to the second area S12.

The third purging module 143 of the purging module 140 enters the first area S11 via the third compartment 133 and the second compartment 132 and supplies a third purging gas to the first area S11.

Here, the purging module 140 controls a purging level of the internal area M1 of the nuclear reactor 10 based on selective jetting of the first to third purging gases.

In the purging module 140, the first to third purging gases may be the same as each other or at least one of the first to third purging gases may be different from the others of the first to third purging gases.

Meanwhile, at least one of the first to third purging gases includes an inert gas (e.g., nitrogen, argon, etc.). Meanwhile, the link fixing module 130 has a plurality of through holes TH formed in a peripheral surface surrounding the first area S11 to the third area S 13.

The purging module 140 performs the purging on the internal area M1 of the nuclear reactor 10 by jetting the first to third purging gases based on the through holes TH.

The first purging gas of the first purging module 141 enters a first internal area M11 corresponding to the first area S11 in the internal area M1 to purge the nuclear reactor 10.

In addition, the second purging gas of the second purging module 142 enters a second internal area M12 corresponding to the second area S12 in the internal area M1 to purge the nuclear reactor 10.

The third purging gas of the third purging module 143 enters a third internal area M13 corresponding to the third area S3 in the internal area M1 to purge the nuclear reactor 10.

Meanwhile, the upper structure portion 111 of the frame unit 110 is provided in a predetermined shape. The lower structure portion 112 of the frame unit 110 is provided to face the upper structure portion 111.

Each of the upper structure portion 111 and the lower structure portion 112 is provided to have a cross-sectional shape such as a quadrangular shape, a polygonal shape, a circular shape, or an elliptical shape. In addition, a single cutting module 120 or a plurality of cutting modules 120 are provided on the frame unit 110 and perform cutting work on the nuclear reactor 10.

A plurality of fire extinguishing modules 150 are provided between the upper structure portion 111 and the lower structure portion 112. The fire extinguishing module 150 serves to supply the fire extinguishing fluid L to a fire occurrence side where the fire occurs in response to the heat source.

The fire extinguishing module 150 is provided on the frame unit 110, and when the fire occurs in the nuclear reactor 10, the fire extinguishing module 150 is melted by a heat source based on the fire to allow the fire extinguishing fluid L positioned therein is automatically supplied to the outside.

Meanwhile, the lower structure portion 112 of the frame unit 110 described above is provided as a ring-shaped body surrounding a peripheral portion of the nuclear reactor 10. The plurality of fire extinguishing module 150 are disposed on a peripheral portion of the lower structure portion 112.

The fire extinguishing modules 150 each supply the fire extinguishing fluid L to the fire occurrence side based on the heat source. In addition, the outer cylindrical body 151 of the fire extinguishing module 150 includes a hollow metal material. The inner cylindrical body 152 of the fire extinguishing module 150 is accommodated inside the tubular portion.

The inner cylindrical body 152 is filled with the fire extinguishing fluid L. The outer cylindrical body 151 has a cut portion formed by cutting at least a portion of a peripheral portion of an outer peripheral surface thereof in a horizontal direction or a vertical direction.

At least a portion of the inner cylindrical body 152 is melted in response to the fire. Through such melting, the fire extinguishing fluid L is supplied to the outside of the outer cylindrical body 151 through the cut portion.

The gas concentration analysis module 160 is provided at at least one position of the frame unit 110 and the nuclear reactor 10 or provided at a portion where the frame unit 110 and the nuclear reactor 10 are adjacent to each other and meet.

Through such a gas concentration analysis module 160, the necessity for purging by the purging module 140 may be grasped and the purging may be performed. In addition, it is possible to manage an operation of the purging module by continuously grasping whether or not the purging has been properly performed.

The suction module 170 corresponds to the purging module 140 and sucks the gas discharged through the purging module 140. To this end, the suction module 170 is provided on the frame unit 110 and the nuclear reactor 10.

In addition, the suction module 170 may move between the frame unit 110 and the nuclear reactor 10, and may perform a suction operation. For example, the suction module 170 may be provided to be movable up and down in a similar manner to the purging module 140.

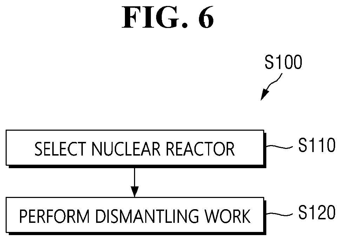

Referring to FIG. 6, in an operation method of the nuclear power plant dismantling apparatus according to an embodiment of the present disclosure, a nuclear reactor 10 to be dismantled is selected. Nuclear power plant dismantling work is performed on the nuclear reactor 10 through the nuclear reactor dismantling apparatus 100.

Here, the nuclear reactor dismantling apparatus 100 is provided with the frame unit 110 shielding the nuclear reactor 10 to prevent contaminants in the nuclear reactor 10 from being released to the outside. Such a nuclear reactor dismantling apparatus 100 includes a function for lifting the nuclear reactor.

The cutting module 120 is provided on the frame unit 110 and performs cutting work on the nuclear reactor 10. The link fixing module 130 having a bar shape enters the internal space M1 of the nuclear reactor 10 to link the frame unit 110 and the nuclear reactor 10 with each other.

Such a link fixing module 130 has the hollow area S1 formed therein. Meanwhile, the purging module 140 enters the hollow area S1 of the link fixing module 130, and performs purging on the inside of the nuclear reactor 10 in order to secure safety in the cutting work.

Meanwhile, the fire extinguishing module 150 is provided on the frame unit 110. When a fire occurs in the nuclear reactor 10, the fire extinguishing module 150 is melted by a heat source based on the fire. Through such melting, the fire extinguishing fluid L positioned in the fire extinguishing module 150 is automatically supplied to the outside.

The embodiments of the present disclosure have been described hereinabove with reference to the accompanying drawings, but it will be understood by one of ordinary skill in the art to which the present disclosure pertains that various modifications and alterations may be made without departing from the technical spirit or essential feature of the present disclosure. Therefore, it is to be understood that the embodiments described above are illustrative rather than being restrictive in all aspects.

## Claims

1. A nuclear power plant dismantling method comprising:
selecting a nuclear reactor to be dismantled; and
performing nuclear power plant dismantling work on the nuclear reactor through a nuclear reactor dismantling apparatus,
wherein the nuclear reactor dismantling apparatus includes:
a frame unit shielding the nuclear reactor to prevent contaminants in the nuclear reactor from being released to the outside;
a cutting module provided on the frame unit and performing cutting work on the nuclear reactor;
a fire extinguishing module provided on the frame unit, and melted by a heat source based on a fire to automatically supply a fire extinguishing fluid positioned therein to the outside when the fire occurs in the nuclear reactor.

2. The nuclear power plant dismantling method of claim 1, wherein the frame unit includes an upper structure portion and a lower structure portion facing the upper structure portion, and
a plurality of fire extinguishing modules are provided between the upper structure portion and the lower structure portion, and supply the fire extinguishing fluid to a fire occurrence side where the fire occurs in response to the heat source.

3. The nuclear power plant dismantling method of claim 2, wherein the lower structure portion of the frame unit is provided as a ring-shaped body surrounding a peripheral portion of the nuclear reactor, and
the plurality of fire extinguishing modules are disposed on a peripheral portion of the lower structure portion, and each supply the fire extinguishing fluid to the fire occurrence side based on the heat source.

4. The nuclear power plant dismantling method of claim 2, wherein the fire extinguishing module includes:
an outer cylindrical body including a hollow metal material; and
an inner cylindrical body accommodated inside the tubular portion and filled with the fire extinguishing fluid,
the outer cylindrical body has a cut portion formed by cutting at least a portion of a peripheral portion of an outer peripheral surface thereof in a horizontal direction or a vertical direction, and
when the inner cylindrical body is melted in response to the fire, the fire extinguishing fluid is supplied to the outside through the cut portion.

5. A nuclear power plant dismantling apparatus comprising:
a frame unit shielding the nuclear reactor to prevent contaminants in the nuclear reactor from being released to the outside;
a cutting module provided on the frame unit and performing cutting work on the nuclear reactor; and
a fire extinguishing module provided on the frame unit, and melted by a heat source based on a fire to automatically supply a fire extinguishing fluid positioned therein to the outside when the fire occurs in the nuclear reactor.
